# EUROPEAN PATENT APPLICATION

(11) **EP 4 198 922 A1**
(43) Date of publication of application: **21.06.2023**
(21) Application number: 21215194.8
(22) Date of filing: 16.12.2021
(51) Int. Cl.: G06V 20/59, G06V 40/20, G06V 10/82

(54) **COMPUTER IMPLEMENTED METHOD, COMPUTER SYSTEM AND NON-TRANSITORY COMPUTER READABLE MEDIUM FOR DETECTING A PERSON IN THE PASSENGER COMPARTMENT OF A VEHICLE**

(71) Applicant: Aptiv Technologies Limited, St. Michael (BB)
(72) Inventor: Marchewska, Dariusz, Krakow (PL); Szelest, Marcin, Krakow (PL)
(74) Representative: Manitz Finsterwald Patent- und Rechtsanwaltspartnerschaft mbB

(57) **Abstract**

Computer implemented method for detecting a person in the passenger compartment of a vehicle, the method comprising illuminating the inside of the passenger compartment of the vehicle using an infrared light source, obtaining a stream of a plurality of consecutive images from the inside of the illuminated passenger compartment of the vehicle using an infrared camera, identifying moving objects in the stream based on an object detection algorithm using a processor and improving the image quality of the moving objects in the stream based on a machine-learning algorithm using the processor.

## Description

### FIELD

The present disclosure relates to methods and systems for detecting a person in the passenger compartment of a vehicle.

### BACKGROUND

Digital imaging devices, such as digital cameras, may be used in automotive applications to detect persons in the passenger compartment of a vehicle. In particular, such imaging devices may be used to determine whether the driver of the vehicle is sleepy.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for detecting a person in the passenger compartment of a vehicle. Therein, the method comprises, in a first step, to illuminate the inside of the passenger compartment of the vehicle using an infrared light source. The method comprises, in a further step, to obtain a stream of a plurality of consecutive images from the inside of the illuminated passenger compartment of the vehicle using an infrared camera. The method comprises, in a further step, to identify moving objects in the stream based on an object detection algorithm using a processor. The method comprises, in a further step, to improve the image quality of the moving objects in the stream based on a machine-learning algorithm using the processor.

The method is suitable to detect the presence of person in the passenger compartment of a vehicle. The vehicle is typically an automobile comprising a passenger compartment, which may also be described as a cabin, with at least one seat, typically two or more seats.

In a first step, the inside of the passenger compartment is illuminated by use of an infrared light source. An infrared light source may be, for example, an infrared LED or an infrared VCSEL. The infrared light source is for example mounted on the dashboard, the headliner or near or at the rear-view mirror of the vehicle and illuminates at least a part of the passenger compartment. Optionally, two or more infrared light sources may be used, either similar or the same type of light infrared sources or different types of infrared light sources. Multiple light sources may be used to illuminate different parts of the passenger compartment. Infrared light source means that at least a part of the emitted light, typically the majority or all of the emitted light lies in the infrared spectrum and is not visible to the human eye. This is particularly suitable for low-light conditions, such as, for example, in dusk, dawn or at night. This is further suitable so as not to distract the driver of the vehicle.

In a further step, which may be performed simultaneously with the first step, a stream of a plurality of consecutive images from the inside of the passenger compartment of the vehicle is obtained by using an infrared camera. A stream comprises of a plurality of consecutive images, in particular at a given frame rate of, for example 5 fps, 10 fps, 20 fps or 24 fps. The stream may also be described as a video stream. The camera, which may be a CCD or CMOS camera, is adapted to capture images in the infrared spectrum.

However, the camera is also adapted to capture images in the visible spectrum, for use in different lighting condition, such as, for example, daylight conditions. However, by capturing the images in the infrared range from the passenger compartment being illuminated by infrared light, the stream of consecutive images is also visible to the camera as it is adapted to capture infrared light.

The camera may be mounted to the dashboard, the headliner or near or at the rear-view mirror of the vehicle and adapted to capture at least a part of the passenger compartment. There may be also two or more cameras, capturing different parts of the passenger compartment.

In a further step, at least one moving object in the stream is identified based on the object detection algorithm using a processor. A moving object in this particular case is typically a person, in particular a driver and/or a passenger being located in the passenger compartment. An object detection algorithm, which may also be phrased as an object recognition algorithm, is adapted to identify objects, in particular moving objects in the stream of consecutive picture.

The object detection algorithm may be in particular adapted to locate, in the stream of a plurality of consecutive images, key points that are moving, such as, for example, one or more eyes, a mouth, an arm, or the like, of a person. Then, the object detection algorithm is further adapted to identify the borders or boundaries of the moving object in the stream and thereby identify one or more moving objects in the stream.

The object detection algorithm may in particular be a sematic segmentation algorithm or make at least partly use of such a sematic segmentation algorithm. Therein, the semantic segmentation algorithm may be used to locate and identify objects, in particular moving objects, and/or boundaries thereof.

The method comprises, in a further step, to improve the image quality of the moving objects in the stream based on a machine-learning algorithm using the processor. In particular, by using a machine-learning algorithm, the image quality may be enhanced. For example, by using a machine learning algorithm, blurred images, in particular resulting from low lighting conditions, may be enhanced in a way that they are less blurred. Similarly, the pixel resolution may be improved by using the machine-learning algorithm.

Through the method it is possible to carry out machine-learning algorithms, which require high computational power, only on the moving objects, thus being using less resources.

According to an embodiment, the method further comprises to identify at least one static object in the stream based on the object detection algorithm using the processor and to improve the image quality of the static objects in the stream based on an image stacking algorithm using the processor.

Static objects in this particular case typically comprise objects, such as hand bags or items like a mobile phone or a purse, but not persons or living animals. Static in this context means objects that do not move over a predetermined period of time or a predetermined number of consecutive images in the stream. The sum of static objects may also be phrased as the background, as it is not moving.

The static objects are identified by using the same object detection algorithm as for the moving objects. In particular, by having identified the moving object or objects in the stream of images, the remaining part may be identified as static or non-moving objects.

Then, an image stacking algorithm is used to improve or enhance the image quality in the stream. For example, by using an image stacking algorithm, blurred images, in particular resulting from low lighting conditions, may be enhanced in a way that they are less blurred. Similarly, the pixel resolution may be improved by using the image stacking algorithm. The image stacking algorithm is very effective, however, it does not work for moving objects in consecutive images in a stream but only for static objects.

By distinguishing the objects into moving objects and into static objects, the respective algorithm can be used to enhance or improve the overall image quality of the stream. In particular, by using the machine-learning algorithm only on the moving objects and by using the image stacking algorithm only on the static images, computational resources are well balanced.

According to an embodiment, the method further comprises to classify the previously identified moving objects in the stream based on a neural network using the processor.

The neural network is adapted to classify one or more objects, in particular moving objects. As an example, the neural network may identify that a driver is sleepy or tired because of the eye movement, the eyelid movement or yawning. Similarly, the neural network may identify that a passenger has entered the rear of the passenger compartment.

Thereby, a very secure and safe object detection is achieved.

According to an embodiment, the method further comprises to provide a notification based on the classification of the moving objects using the processor. A notification may be a visual and/or acoustic alert. For example, if it is identified that a driver is sleepy or tired because of the eye movement, the eyelid movement or yawning, this may be used to generate a notification to the driver to take a break.

Alternatively, or additionally, the method may further comprise taking an action based on the classification of the moving objects using the processor. For example, if it is identified that a passenger has entered the rear of the passenger compartment, a taximeter in the vehicle may be started.

According to an embodiment, the method further comprises to classify the previously identified static objects in the stream based on a neural network using the processor.

The neural network, which may be the same neural network as explained before, is adapted to classify objects, in particular static objects. As an example, the neural network may identify that a phone or a purse has been left behind. Similarly, the neural network may identify that a child seat has been left behind.

Thereby, a very secure and safe object detection is achieved.

According to an embodiment, the method further comprises to provide a notification based on the classification of the static objects using the processor. In particular, if it has been identified that a phone or a purse has been left behind the driver or the passenger may be notified.

Alternatively, or additionally, the method may further comprise taking an action based on the classification of the static objects using the processor. For example, if it has been identified that a phone or a purse has been left behind, a light may be switched on in the passenger compartment.

To the contrary, if it has been for example identified that a child seat has been left behind, no action may be taken as the child seat is supposed to stay in the vehicle after the passenger leaves.

In another aspect, the present disclosure is directed at a computer system, said computer system being configured to carry out several or all steps of the computer implemented method described herein.

The computer system may comprise a processor, at least one memory and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: a top view of a computer system for detecting a person in the passenger compartment of a vehicle according to an embodiment; and
- Fig. 2: a flow chart of a method for detecting a person in the passenger compartment of a vehicle according to an embodiment.

### DETAILED DESCRIPTION

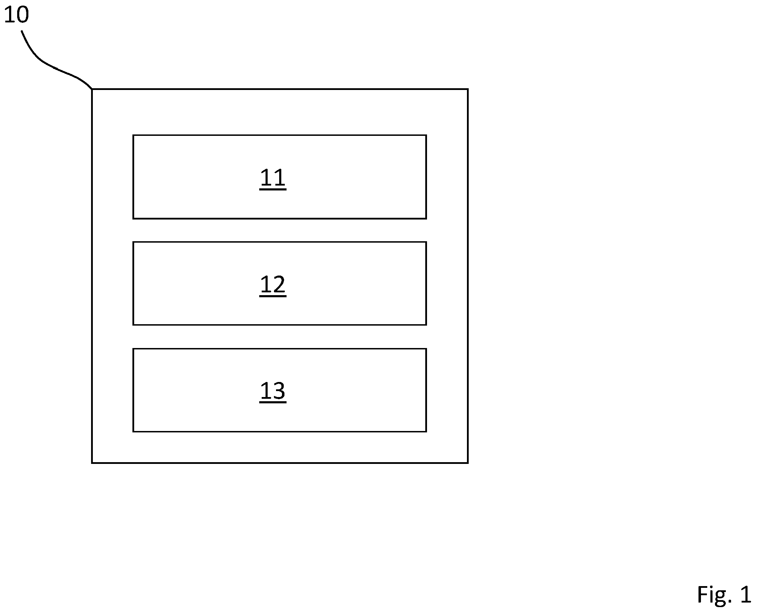

Fig. 1 depicts a top view of a computer system 10 for detecting a person in the passenger compartment of a vehicle according to an embodiment.

Therein, the computer system 10 comprises a processor 11, an infrared light source unit comprising at least one infrared light source 12 and an infrared camera unit comprising at least one infrared camera 13.

Therein, the computer system 10 is adapted to illuminate the inside of the passenger compartment of the vehicle using the infrared light source 12.

The computer system 10 is further adapted to obtain a stream of a plurality of consecutive images from the inside of the illuminated passenger compartment of the vehicle using the infrared camera 13.

The computer system 10 is further adapted to identify moving objects in the stream based on an object detection algorithm using the processor 11.

The computer system 10 is further adapted to improve the image quality of the moving objects in the stream based on a machine-learning algorithm using the processor 11.

The computer system 10 is further adapted to identify static objects in the stream based on the object detection algorithm using the processor 11.

The computer system 10 is further adapted to improve the image quality of the static objects in the stream based on an image stacking algorithm using the processor 11.

The computer system 10 is further adapted to classify moving objects in the stream based on a neural network using the processor 11.

The computer system 10 is further adapted to provide a notification based on the classification using the processor 11.

The computer system 10 is further adapted to classify static objects in the stream based on a neural network using the processor 11.

The computer system 10 is further adapted to provide a notification based on the classification using the processor 11.

The computer system 10 is further adapted to take an action based on the classification using the processor 11.

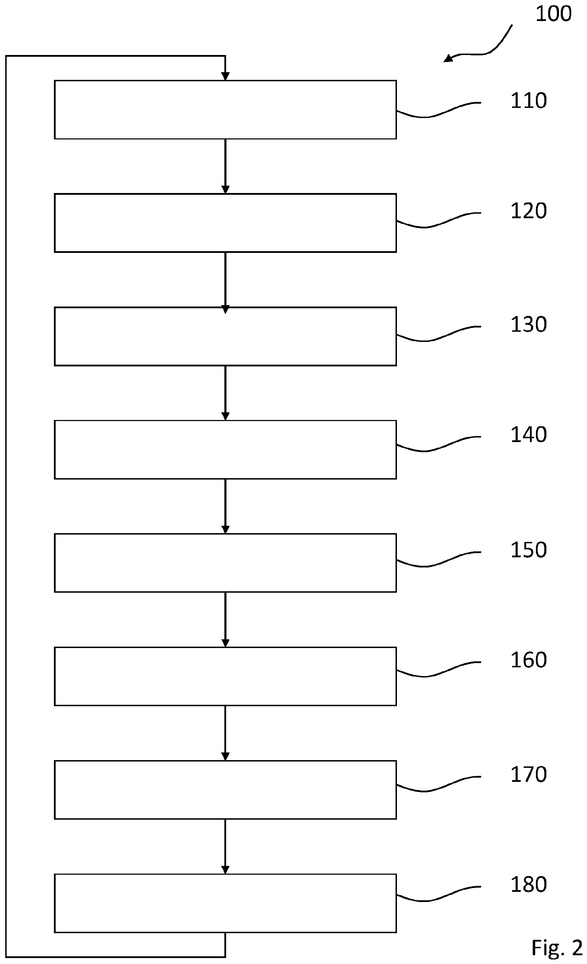

Fig. 2 depicts a flow chart of a method 100 for detecting a person in the passenger compartment of a vehicle according to an embodiment.

The method 100 comprises, in a first step 110, to illuminate the inside of the passenger compartment of the vehicle.

The method 100 comprises, in a further step 120, to obtain a stream of a plurality of consecutive images from the inside of the illuminated passenger compartment of the vehicle.

The method 100 comprises, in a further step 130, to identify moving objects in the stream based on an object detection algorithm.

The method 100 comprises, in a further step 140, to improve the image quality of the moving objects in the stream based on a machine-learning algorithm.

The method 100 comprises, in a further step 150, to identify static objects in the stream based on the object detection algorithm.

The method 100 comprises, in a further step 160, to improving the image quality of the static objects in the stream based on an image stacking algorithm.

The method 100 comprises, in a further step 170, to classifying static and moving objects in the stream based on a neural network.

The method 100 comprises, in a further step 180, to provide a notification or take an action based on the classification of the static and moving objects.

After the final step, the method 100 may return to step 110 and repeat itself.

### Reference numeral list

- 10: computer system
- 11: processor
- 12: infrared light source
- 13: infrared camera
- 100: method
- 110: method step
- 120: method step
- 130: method step
- 140: method step
- 150: method step
- 160: method step
- 170: method step
- 180: method step

## Claims

1. Computer implemented method for detecting a person in the passenger compartment of a vehicle,
the method comprising:
- illuminating the inside of the passenger compartment of the vehicle using an infrared light source;
- obtaining a stream of a plurality of consecutive images from the inside of the illuminated passenger compartment of the vehicle using an infrared camera;
- identifying moving objects in the stream based on an object detection algorithm using a processor; and
- improving the image quality of the moving objects in the stream based on a machine-learning algorithm using the processor.

2. Computer implemented method according to the preceding claim 1, the method further comprising:
- identifying static objects in the stream based on the object detection algorithm using the processor; and
- improving the image quality of the static objects in the stream based on an image stacking algorithm using the processor.

3. Computer implemented method according to any one of the preceding claims,
the method further comprising:
- classifying moving objects in the stream based on a neural network using the processor.

4. Computer implemented method according to the preceding claim 3, the method further comprising:
- providing a notification based on the classification of the moving objects using the processor.

5. Computer implemented method according to the preceding claims 3 or 4, the method further comprising:
- taking an action based on the classification of the moving objects using the processor.

6. Computer implemented method according to any one of the preceding claims 2 to 5,
the method further comprising:
- classifying static objects in the stream based on a neural network using the processor.

7. Computer implemented method according to the preceding claim 6, the method further comprising:
- providing a notification based on the classification of the static objects using the processor.

8. Computer implemented method according to any one of the preceding claims 6 or 7,
the method further comprising:
- taking an action based on the classification of the static objects using the processor.

9. Computer implemented method according to any one of the preceding claims, wherein the object detection algorithm is a semantic segmentation algorithm.

10. Computer system, the computer system being configured to carry out the computer implemented method of at least one of claims 1 to 9

11. Non-transitory computer readable medium comprising instructions for carrying out the computer implemented method of at least one of claims 1 to 9
